(19) Europäisches Patentamt
European Patent Office
Office européen des brevets

(11) **EP 2 372 942 A1**

(12) **EUROPEAN PATENT APPLICATION**
published in accordance with Art. 153(4) EPC

(43) Date of publication:
**05.10.2011 Bulletin 2011/40**

(51) Int Cl.:
*H04L 7/00* (2006.01)   *H04B 1/16* (2006.01)

(21) Application number: **08879131.4**

(22) Date of filing: **25.12.2008**

(86) International application number:
**PCT/JP2008/073574**

(87) International publication number:
**WO 2010/073335 (01.07.2010 Gazette 2010/26)**

(84) Designated Contracting States:
**AT BE BG CH CY CZ DE DK EE ES FI FR GB GR
HR HU IE IS IT LI LT LU LV MC MT NL NO PL PT
RO SE SI SK TR**

(71) Applicant: **Pioneer Corporation
Kanagawa 212-0031 (JP)**

(72) Inventor: **TAKAYA, Hironori
Kawagoe-shi
Saitama 350-8555 (JP)**

(74) Representative: **Haley, Stephen
Gill Jennings & Every LLP
The Broadgate Tower
20 Primrose Street
London EC2A 2ES (GB)**

(54) **BLOCK SYNCHRONIZATION DEVICE, RECEPTION DEVICE, AND BLOCK SYNCHRONIZATION PROCESSING METHOD**

(57)   When synchronization detection processing is started, integration result buffer is cleared. Then, a buffer control part sequentially stores the result of integration of a binary phase shift keying signal for each half bit period that is performed by an integration section in the integration result buffer. The buffer control part detects a phase change of the binary phase shift keying signal according to the temporal change in the value of the integration result. The buffer control part determines whether the stage of the integration result buffer in which the result of the integration for a half bit period just after the time of the phase change is stored is an even or odd stage and confirms that the integration result pair corresponding to 26 symbol bits are stored in the integration result buffer on the basis of the determination. After the confirmation is performed, a binary phase symbol calculation part calculates data values of the 26 symbol bits from 52 integration results stored in the integration result buffer.

Fig. 1

Description

TECHNICAL FIELD

The present invention relates to a block synchronization device, to a reception device, to a block synchronization processing method and a block synchronization processing program, and to a recording medium upon which the block synchronization processing program is recorded.

BACKGROUND ART

From the past, broadcasting in which contents for reproduction consisting of audio and/or images is multiplexed with data has been widespread. As one format for this type of multiplex broadcast, for example, the RDS (Radio Data System) format may be cited, which is much used in Europe. Here, the RDS format is a format in which various types of digital data are transmitted via a FM broadcast signal as multiplexed.

With this RDS format, program identification code (PI) data for the broadcast that is currently being received, alternative candidate station frequency (AF) list data, and so on are included in the multiplexed data. By using this type of data, it becomes possible to make active use of a network follow function, and to perform processing to seek for an alternative candidate station.

A data signal that is multiplexed in the RDS format is a binary phase shift keying signal having a predetermined bit rate (1187.5 bps (bits per second)). This signal is carrier wave suppressed amplitude modulated on a subcarrier wave of frequency 57 KHz, which is the third harmonic component of the 19 kHz stereo pilot tone. As a result, it is frequency multiplexed outside the frequency band of the signal wave after FM modulation of the audio signal. It should be understood that, in the RDS format, this data signal is generated by binary phase shift keying of binary symbol data whose information data bit string is created by differential encoding.

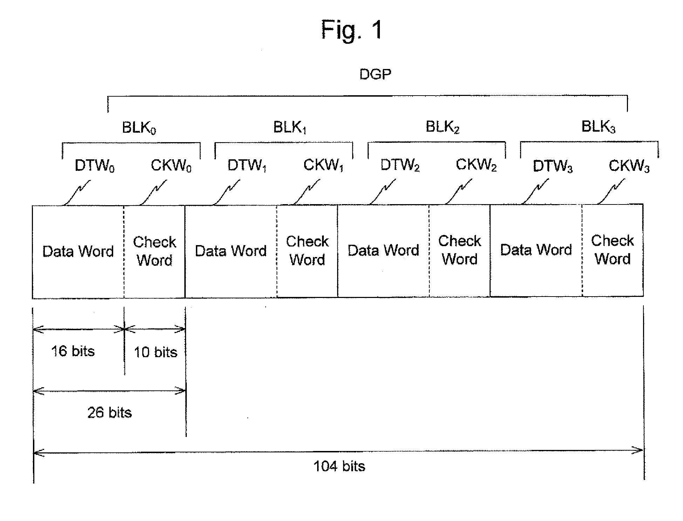

As shown in Fig. 1, in this RDS data, one data group DGP consists of four data blocks $BLK_0$ through $BLK_3$. And each of these data blocks $BLK_j$ (where j=0 through 3) consists of a 16 bit data word $DTW_j$ and a 10 bit check word $CKW_j$. Here, in the RDS format, no common block identification reference symbol is included in the data blocks $BLK_j$ (j=0-3).

In processing for receiving such RDS data, block synchronization is performed after having first confirmed bit synchronization. And, when block synchronization has been detected, then group synchronization is performed.

Here, during block synchronization, for each data block, an offset word that is attached to the rear half 10 bit check word $CKW_j$ is calculated, and block synchronization and group synchronization are checked on the basis of which of certain predetermined values (for example "A", "B", "C", and "D") this offset word that has been calculated is, and on the basis of the periodicity of the offset word that is sequentially calculated (for example "A" → "B" → "C" → "D"). Here, this offset word calculation is performed by syndrome calculation of candidate RDS data blocks (of 26 data bits) according to a predetermined generating polynomial equation (refer to Patent Documents #1 and #2).

Patent Document #1: Japanese Laid-Open Patent Publication Heisei 11 (1999)-112478;
Patent Document #1: Japanese Laid-Open Patent Publication Heisei 8(1996)-79016.

DISCLOSURE OF THE INVENTION PROBLEMS TO BE SOLVED BY THE INVENTION

As described above, in the prior art, the operation of checking block synchronization in relation to RDS data is started after having checked bit synchronization. Here, since a signal with RDS data (hereinafter termed an "RDS data signal") is a phase modulated signal, bit synchronization detection is possible due to its phase changing.

Due to this, in the prior art, the operation of checking for block synchronization in relation to RDS data is performed by employing the RDS data signal after bit synchronization has been detected, in other words after phase changing has been detected. As a result, it has not been possible to anticipate rapid block synchronization.

Because of this, a technique has been eagerly awaited that can rapidly check block synchronization for RDS data. To respond to this requirement is considered as being one problem that the present invention must solve.

The present invention has been conceived in consideration of the circumstances described above, and its object is to provide a block synchronization device, a reception device, and a block synchronization processing method, which are capable of rapidly performing block synchronization for data transmitted with a binary phase shift keying signal.

MEANS FOR SOLVING THE PROBLEMS

Considered from a first standpoint, the present invention proposes a block synchronization device that demodulates a binary phase shift keying signal in a continuously synchronous system upon which information data made up from data blocks made up from a predetermined number of data bits is carried, and that performs block synchronization, characterized by comprising: a wave detection means that performs synchronized wave detection upon said binary phase shift keying signal, and generates a wave detection signal and a synchronization clock signal; an integration means that calculates an integrated value of said wave detection signal for each half bit interval, on the basis of said synchronization clock signal; a buffer storage means that sequentially stores just twice said predetermined number of results of integration by said integration means; an even/odd detection means that detects whether the stage of said buffer storage means in which the result of integration of said wave detection signal by said integration means for the half bit interval directly after a phase change time point is stored, is an even numbered stage or an odd numbered stage; a specification means that, on the basis of the result of detection by said even/odd detection means, performs specification that results of integration by said integration means corresponding to said predetermined number of bits are stored in said buffer storage means; and a calculation means that, on the basis of the contents stored in said buffer storage means at the time point that specification is performed by said specification means, calculates data values for each of said predetermined number of bit interval lengths corresponding to the contents stored in said buffer storage means.

And, considered from a second standpoint, the present invention proposes a reception device that receives a signal upon which is superimposed a binary phase shift keying signal in a continuously synchronous system upon which information data made up from data blocks made up from a predetermined number of data bits is carried, characterized by comprising: a tuning means that performs tuning to a desired broadcasting station that emits a broadcast wave upon which said binary phase shift keying signal is multiplexed; and a block synchronization device as described in any one of Claims 1 through 5 that demodulates said binary phase shift keying signal and performs block synchronization.

Moreover, considered from a third standpoint, the present invention proposes a block synchronization processing method that is used by a block synchronization device that demodulates a binary phase shift keying signal in a continuously synchronous system upon which information data made up from data blocks made up from a predetermined number of data bits is carried, and that performs block synchronization, characterized by comprising: a wave detection process of performing synchronized wave detection upon said binary phase shift keying signal, and generating a wave detection signal and a synchronization clock signal; an integration process of performing calculation of an integrated value of said wave detection signal for each half bit interval on the basis of said synchronization clock signal, and sequentially storing just twice said predetermined number of results of integration in a buffer storage means; a detection process of detecting whether the stage of said buffer storage means in which the result of integration of said wave detection signal for the half bit interval directly after a phase change time point is stored, is an even numbered stage or an odd numbered stage; a specification process of, on the basis of the result of detection by said detection process, performing specification that results of integration corresponding to said predetermined number of bits are stored in said buffer storage means; and a calculation process of, on the basis of the contents stored in said buffer storage means at the time point that specification is performed by said specification process, calculating data values for each of said predetermined number of bit interval lengths corresponding to the contents stored in said buffer storage means.

Furthermore, considered from a fourth standpoint, the present invention proposes a block synchronization processing program, characterized in that it causes a calculation means to execute a block synchronization processing method according to the present invention.

And, considered from a fifth standpoint, the present invention proposes a recording medium, characterized in that a block synchronization processing program according to the present invention is recorded thereupon so as to be readable out by a calculation means.

## BRIEF DESCRIPTION OF THE DRAWINGS

Fig. 1 is a figure for explanation of the structure of a data group and data blocks that are employed with the RDS format;
Fig. 2 is a block diagram of the structure of a reception device according to an embodiment of the present invention;
Fig. 3 is a block diagram showing the structure of a data signal processing unit of Fig. 2;
Fig. 4 is a block diagram showing the structure of a binary symbol decoding part of Fig. 3;
Fig. 5 is a timing diagram for explanation of the operation of an integration part of Fig. 4;
Fig. 6 is a figure for explanation of symbol calculation operation by a binary symbol decoding calculation part of Fig. 4 (the first part thereof);
Fig. 7 is a figure for explanation of symbol calculation operation by this binary symbol decoding calculation part of Fig. 4 (the second part thereof);
Fig. 8 is a block diagram showing the structure of a differential decoding part of Fig. 3;
Fig. 9 is a flow chart for explanation of processing by a synchronization control part of Fig. 3;
Fig. 10 is a flow chart for explanation of initial setting processing in Fig. 9;
Fig. 11 is a flow chart for explanation of processing by a buffer control part of Fig. 4;
Fig. 12 is a flow chart for explanation of processing by a data output control part of Fig. 8 (the first part thereof);
Fig. 13 is a flow chart for explanation of this processing by the data output control part of Fig. 8 (the second part thereof); and
Fig. 14 is a flow chart for explanation of this processing by the data output control part of Fig. 8 (the third part thereof).

**BEST MODE FOR CARRYING OUT THE INVENTION**

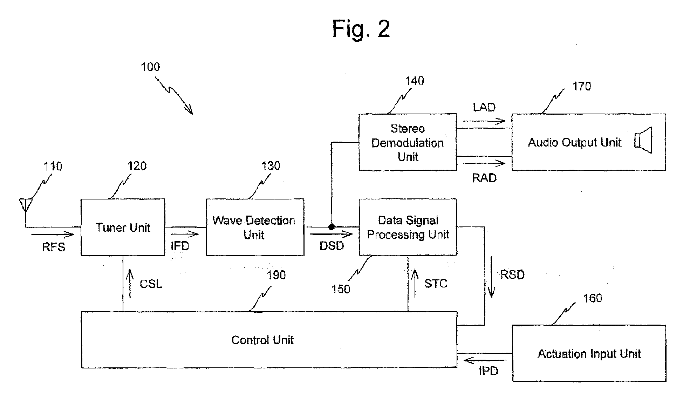

In the following, an embodiment of the present invention will be explained with reference to Figs. 2 through 14. It should be understood that, in this embodiment, an example is shown and explained of a FM radio reception device compatible with RDS, which is mounted to a vehicle. Moreover, in the explanation and the drawings, the same reference symbols are affixed to elements that are the same or equivalent, and duplicate explanation is omitted.

[Structure]

The schematic structure of a reception device 100 according to an embodiment is shown in Fig. 2 as a block diagram. As shown in this Fig. 21, the reception device 100 comprises an antenna 110, a tuner unit 120 that serves as a tuning means, and a wave wave detection unit 130. Moreover, the reception device 100 comprises a stereo demodulation unit 140 and a data signal processing unit 150 that serves as a block synchronization device. Furthermore, the reception device 100 also comprises an actuation input unit 160, an audio output unit 170, and a control unit 190.

The antenna 110 described above receives broadcast waves. The result of reception by the antenna 110 is sent to the tuner unit 120 as a signal RFS.

According to a tuning command CSL from the control unit 190, the tuner unit 120 described above performs tuning processing to extract the signal of the broadcasting station that is to be selected from the signal RFS, and sends it to the wave detection unit 130 as a signal IFD on a predetermined intermediate frequency band. This tuner unit 120 comprises an input filter, a high frequency amplifier (RF-AMP: Radio Frequency Amplifier), a band pass filter (hereinafter also termed an "RF filter"), a mixer (i.e. a mixing device), an intermediate frequency filter (hereinafter also termed an "IF filter"), an AD (Analogue to Digital) converter (ADC), and a local oscillator circuit, all of which are not shown in the figure.

Here, after the low frequency component in the signal RFS that is received by the antenna 110 has been eliminated by the input filter, which is a high pass filter, it is amplified by the high frequency amplifier. After a signal in a specific frequency range has been selected with the RF filter, the result of amplification by the high frequency amplifier is sent to the mixer.

In the mixer, the signal that has passed through the RF filter and an oscillation signal corresponding to the tuning command CSL that has been generated by the local oscillation circuit are mixed together. After a signal component in an intermediate frequency range that has been determined in advance has been selected from the signal that results from this mixing by the mixer, it is converted to a digital signal by the ADC. And the result of this conversion is sent to the wave detection unit 130 as the signal IFD.

The wave detection unit 130 described above receives the signal IFD from the tuner unit 120. And the wave detection unit 130 performs digital wave detection processing thereupon according to a predetermined method, and generates a signal DSD. The signal DSD that has been generated in this manner is sent to the stereo demodulation unit 140 and to the data signal processing unit 150.

It should be understood that the signal DSD includes a composite signal component, which is an audio signal, and a RDS data signal component.

The stereo demodulation unit 140 described above receives the signal DSD from the wave detection unit 130. First, this stereo demodulation unit 140 extracts the composite signal included in the signal DSD. And the stereo demodulation unit 140 performs stereo demodulation processing upon this composite signal that it has extracted, and generates a left channel audio signal LAD (hereinafter also termed the "L signal") and a right channel audio signal RAD (hereinafter also termed the "R signal"). The L signal LDA and the R signal RDA that are generated in this manner are outputted to the audio output unit 170.

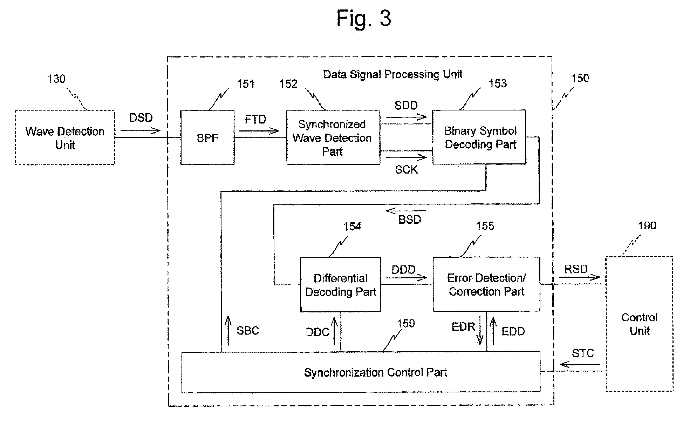

The data signal processing unit 150 described above performs decoding on the basis of the RDS data in the signal DSD from the wave detection unit 130. As shown in Fig. 3, the data signal processing unit 150 having this function comprises a band pass filter (BPF) 151 and a synchronized wave detection part 152 that serves as a wave detection means. Moreover, this data signal processing unit 150 comprises a binary symbol decoding part 153, a differential decoding part 154, and an error detection/correction part 155 that serves as an error detection means. Yet further, this data signal processing unit 150 comprises a synchronization control part 159 that serves as a block synchronization detection means.

The BPF 151 described above receives the signal DSD from the wave detection unit 130. And the BPF 151 selectively passes through the RDS data signal component in the signal DSD. The signal that has passed through the BPF 151 in this manner is sent to the synchronized wave detection part 152 as a signal FTD.

The synchronized wave detection part 152 described above receives the signal FTD from the BPF 151. And this synchronized wave detection part 152 includes a PLL (Phase Locked Loop) circuit, and, along with performing digital wave detection processing upon the signal FTD and generating a signal SDD which is a binary phase shift keying signal, also generates a synchronization clock signal SCK. The signal SDD and the synchronization clock signal SCK that have been generated in this manner are sent to the binary symbol decoding part 153.

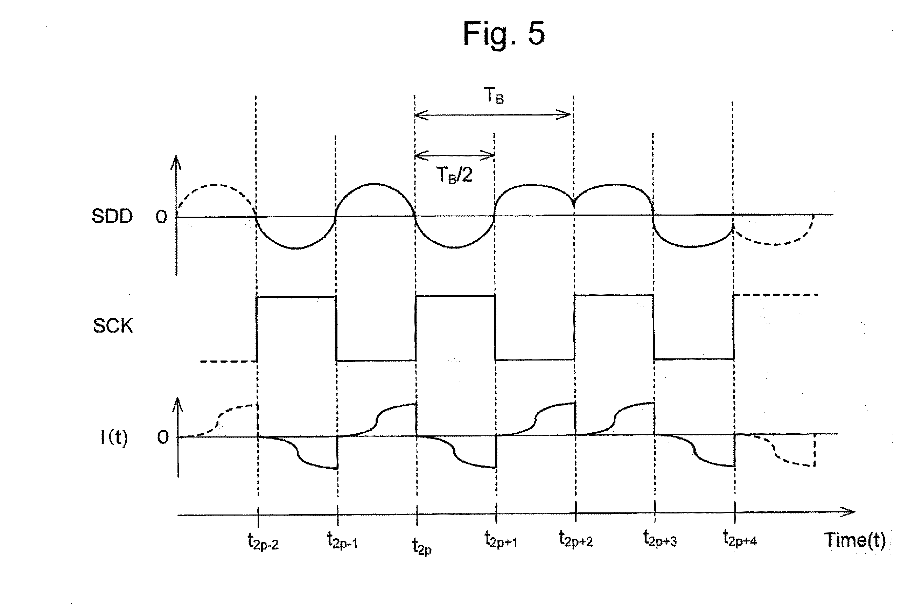

It should be understood that examples of the waveforms of the signal SDD and the synchronization clock signal SCK that are generated by the synchronized wave detection part 152 are shown in Fig. 5 and will be described hereinafter. In the following, as shown in Fig. 5, this will be explained while taking the length of the time interval for 1 bit as the "time interval $T_B$".

Returning to Fig. 3, the binary symbol decoding part 153 described above performs decoding processing of the binary symbol bit data by executing demodulation processing upon the signal SDD, on the basis of the signal SDD and the synchronization clock signal SCK from the synchronized wave detection part 152. It should be understood that it is arranged for the binary symbol decoding part 153, upon receipt of a start command SBC for binary symbol decoding processing from the synchronization control part 159, to start binary symbol decoding processing anew.

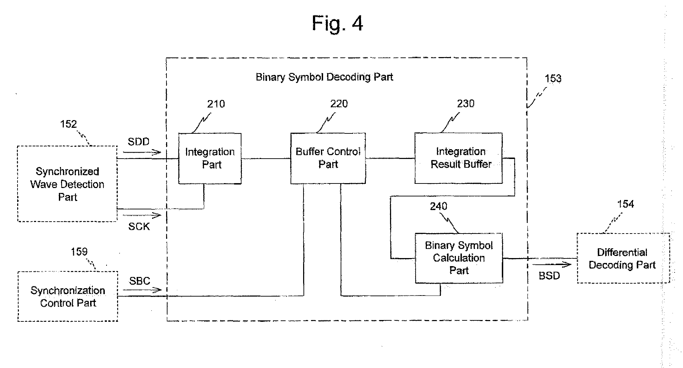

As shown in Fig. 4, the binary symbol decoding part 153 having the above function comprises an integration part 210 that serves as an integration means, and a buffer control part 220 that serves as an even/odd detection means and as a specification means. Moreover, this binary symbol decoding part 153 comprises an integration result buffer 230 that serves as a buffer storage means, and a binary symbol calculation part 240 that serves as a calculation means.

The integration part 210 described above receives the signal SDD and the synchronization clock signal SCK from the synchronized wave detection part 152. And the integration part 210 performs time integration of the signal SDD for each of a front half bit interval, which is the front half of the 1-bit interval, and a rear half bit interval, which is the rear half of the 1-bit interval, thus calculating its integrated values I(t) (where t is time).

An example of the integrated values I(t) calculated in this manner is shown in Fig. 5, along with examples of the waveforms of the signal SDD and the synchronization clock signal SCK described above. It should be understood that, in the following explanation, it will be supposed that the front half bit interval starts directly after the time instant $t_{2p}$ (where p=1, 2, ...), and the rear half bit interval starts directly after the time instant $t_{2p+1}$ (where p=1, 2, ...).

Having calculated the integrated value $I(t_{2p+1})$ which is the result of integration over the front half bit interval or the integrated value $I(t_{2(p+1)})$ which is the result of integration over the rear half bit interval, the integration part 210 sends the result of this calculation to the buffer control part 220. It should be understood that it is not arranged for the integration part 210 to recognize whether each of the integration intervals is a front half bit interval or a rear half bit interval; it just performs integration for each half bit interval.

It should be understood that in this embodiment, as shown in Fig. 5, the values of the signal SDD are positive and negative respectively over almost the entire front half bit interval and over almost the rear half bit interval. Due to this, the positive or negative sign of the integrated value $I(t_{2p+1})$ which is the result of integration over the front half bit interval, and the positive or negative sign of the integrated value $I(t_{2(p+1)})$ which is the result of integration over the rear half bit interval, are mutually opposite.

Returning to Fig. 4, upon receipt of the start command SBC from the synchronization control part 159, and after having performed clearing of the integration result buffer 230, the buffer control part 220 described above starts reception of the integration results from the integration part 210. And the buffer control part 220 sequentially stores the integrated values that are reported in the integration result buffer 230 as integration results.

Furthermore, upon receipt of a new integration result, the buffer control part 220 compares together the positive or negative sign of this new integration result and the positive or negative sign of the integration result that was received directly previously. And, if both of these positive or negative signs are the same, then the occurrence of a phase change in the signal SDD is detected. And it is detected whether the stage of the integration result buffer 230 in which this new integration result is stored is an even numbered stage or an odd numbered stage, and the result of this detection is stored.

The buffer control part 220 performs this type of detection processing only once, each time it receives the start command SBC from the synchronization control part 159. In other words it is arranged for the buffer control part 220, after receipt of the start command SBC from the synchronization control part 159, to store even/odd information specifying the stage of the integration result buffer 230 in which the integration result at the time point that the phase change was initially detected is stored (hereinafter simply termed "even/odd information"), until it next receives the start command SBC from the synchronization control part 159.

Moreover, on the basis of the number of integration results that have been received and the even/odd information, the buffer control part 220 specifies that integration result pairs for 26 symbol bits (each being a pair, related to one symbol bit, of the integration result for its front half bit interval and the integration result for its rear half bit interval) have been stored in the integration result buffer 230, which consists of 52 stages as will be described hereinafter. And, at the time point that this specification has been performed, the buffer control part 220 issues a first calculation command to the binary symbol calculation part 240, to the effect that the data values for these 26 symbol bits are to be calculated. Thereafter, each time two integration results are newly stored in the integration result buffer 230, the buffer control part 220 issues a second calculation command to the effect that the data values for this one symbol bit are to be calculated.

The above described integration result buffer 230 is a data buffer having 52 stages, and is made as a so called ring buffer. Thus, it is arranged for, at a maximum, the 52 integration results most recently sent from the buffer control part 220 to be stored in this integration result buffer 230. It should be understood that the following explanation is expressed in terms of the stage in which the oldest integration result is stored, at each time point, being the 0-th stage, and, in the buffer full state, in terms of the newest integration result being stored in the 51-st stage. Furthermore, it will be supposed that the integration result stored in the q-th stage (where q=0, 1, ... 51) is the "integration result IRq".

Upon a calculation command from the buffer control part 220, the binary symbol calculation part 240 described above performs calculation of the data values of the symbol bits. Here, when the first calculation command is received as this calculation command, the 52 integration results that are stored in the integration result buffer 230 are read in, and data values $SD_r$ (where r=0 to 25) are calculated for their 26 symbol bits.

During the calculation of each of these data values $SD_r$ (="0" or "1"), in this embodiment, the binary symbol calculation part 240 first calculates a value $SV_r$ according to the following Equation (1):

$$SV_r = IR_{2r} - IR_{2r+1} \ .... \ (1)$$

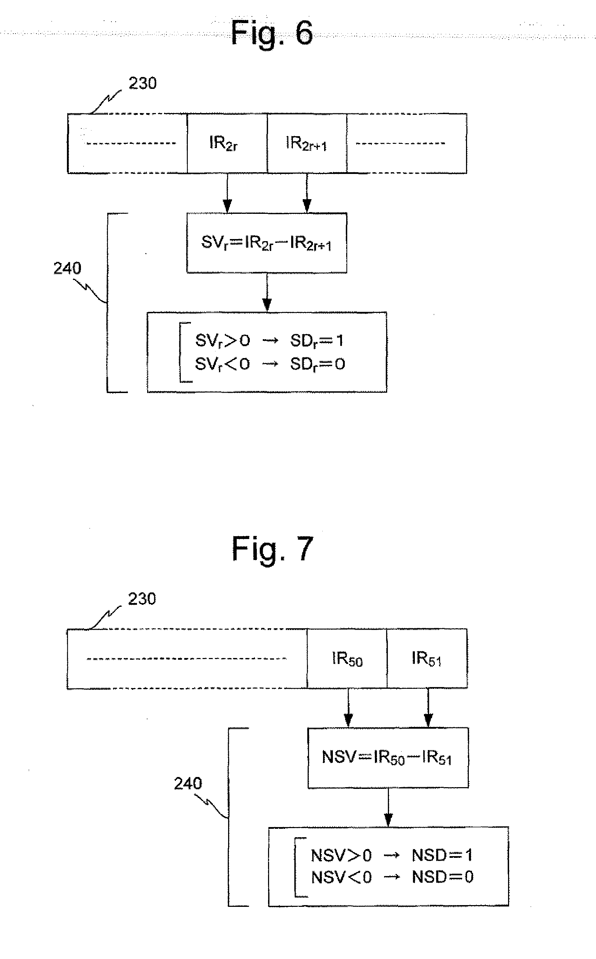

Next, the binary symbol calculation part 240 calculates the data value $SD_r$ for this symbol bit on the basis of the positive or negative sign of the value $SV_r$. In this embodiment, it is arranged for the binary symbol calculation part 240 to calculate the data value $SD_r$ as being "1" if the value $SV_r$ is a positive value, and to calculate the data value $SD_r$ as being "0" if the value $SV_r$ is a negative value. This way in which this data value $SD_r$ is calculated is shown in Fig. 6.

And the binary symbol calculation part 240 sends the 26 data values $SD_r$ that have been calculated to the differential decoding part 154 as the signal BSD, in time order.

Moreover, upon receipt of the second calculation command from the buffer control part 220 as the calculation command, the binary symbol calculation part 240 reads in the integration results $IR_{50}$ and $IR_{51}$ that are stored in the integration result buffer 230, and calculates a data value NSD of one symbol bit. During the calculation of this data value NSD, in this embodiment, the binary symbol calculation part 240 first calculates a value NSV according to the following Equation (2):

$$NSV = IR_{50} - IR_{51} \ .... \ (2)$$

Next, on the basis of the positive or negative sign of the value NSV, the binary symbol calculation part 240 calculates the data value NSD, in a similar manner to the case for the calculation of the data values $SD_r$. This way in which the data value NSD is calculated is shown in Fig. 7.

And the binary symbol calculation part 240 sends the data value NSD that has been calculated to the differential decoding part 154 as a signal BSD.

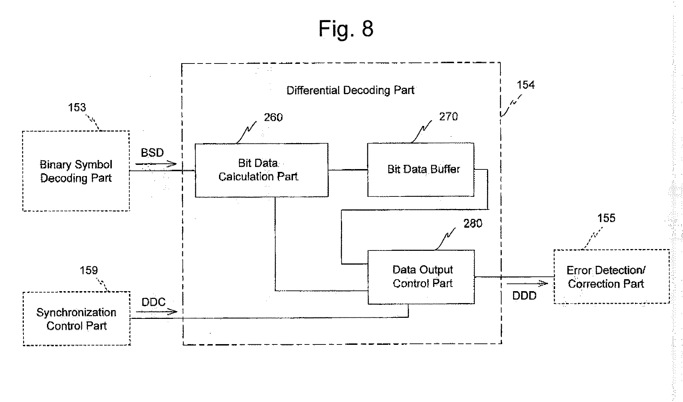

Returning to Fig. 3, the differential decoding part 154 described above performs differential decoding upon the data that has arrived from the binary symbol decoding part 153 as the signal BSD. It should be understood that it is arranged for the differential decoding part 154 to perform this differential decoding processing according to the contents of an operation command DDC from the synchronization control part 159. As shown in Fig. 8, the differential decoding part 154 that has this function comprises a bit data calculation part 260, a bit data buffer 270, and a data output control part 280.

The bit data calculation part 260 described above receives the signal BSD from the binary symbol decoding part 153. And, when new symbol bit data values as the signal BSD are received, this bit data calculation part 260 compares together the new symbol bit data values and the symbol bit data values that were received as the directly preceding signal BSD, and makes a decision as to whether or not they are the same. And, on the basis of the result of this decision, the bit data calculation part 260 calculates a new information bit data value. Then the bit data calculation part 260 stores the newly calculated data value in the data bit buffer 270. It should be understood that it is arranged for the bit data calculation part 260 to send a storage report to the data output control part 280, each time a newly calculated data value is stored in the data bit buffer 270.

In this embodiment, it is arranged for "0" to be calculated as the data value of the new information bit if the result of the decision described above is affirmative. Moreover, it is arranged for "1" to be calculated as the data value of the new information bit if the result of the decision described above is negative.

The bit data buffer 270 described above is a 26-stage bit data buffer, and is made as a so called ring buffer. And it is arranged for data values for the 26 bits that have been sent most recently from the bit data calculation part 260 to be stored in this data bit buffer 270, at a maximum.

In a mode in which it operates according to operating commands DDC from the synchronization control part 159, the data output control part 280 described above reads the data values for 26 bits in the bit data buffer 270, while referring to the storage report from the bit data calculation part 260. And the data output control part 280 sends the data values for these 26 bits that it has read to the error detection/correction part 155 as a signal DDD.

It should be understood that, while first through third output commands are issued with the operating command DDC, the operation of the data output control part 280 corresponding to these output commands will be described hereinafter.

Returning to Fig. 3, the error detection/correction part 155 described above performs operation according to an operating command ECC from the synchronization control part 159. If data non-reporting operation is commanded by this operating command ECC, then the error detection/correction part 155 only performs error checking for the data values for 26 bits received from the differential decoding part 154, and sends the checking result EDR to the synchronization control part 159. During this error checking, the error detection/correction part 155 performs syndrome calculation using a generating polynomial equation determined by the RDS format. And the error detection/correction part 155 performs block error checking on the basis of the result of this syndrome calculation.

This block error checking is performed by checking as to whether or not an offset word has been correctly obtained by the syndrome calculation. Here, for the first block error check after synchronization detection operation starts, this checking as to whether an offset word has been correctly obtained or not is performed by checking whether or not one among a plurality of predetermined offset words ("A", "B", "C", and "D") has been obtained by the syndrome calculation. And, for subsequent block error checks, furthermore, it is performed by checking whether or not the offset word that has been obtained by the syndrome calculation is obtained according to a predetermined sequence (the sequence ("A" → "B"→ "C"→ "D"→ "A" →...).

Furthermore, when data reporting operation has been commanded as the operating command ECC, in addition to block error checking and checking result reporting, if a block error has been detected, the error detection/correction part 155 also performs correction of the data word on the basis of the result of the syndrome calculation. And, if no block error has been detected, then the error detection/correction part 155 employs the data word just as it is; while, if a block error has been detected, then, while employing the result of correcting the data word, also, each time the data for one new group (the four blocks with offset words from "A" to "D") is complete, the part 155 takes this as a signal RSD, and sends it to the control unit 190.

It should be understood that PI data and AF data and so on are included in the data sent from the error detection/correction part 155 to the control unit 190.

The synchronization control part 159 described above controls the operation of the data signal processing unit 150. Upon receipt of a synchronization start command STC from the control unit 190, this synchronization control part 159 starts new synchronization detection control processing. This synchronization control processing by the synchronization control part 159 will be described hereinafter.

Returning to Fig. 2, the actuation input unit 160 described above is made as a key part that is provided to a main body portion of the reception device 100, or as a remote input device or the like to which a key part is provided. Here, it is possible to use a touch panel that is provided to a display unit not shown in the figures as the key part that is provided to the main body portion. Moreover, instead of providing a key part, it would also be acceptable to employ a structure for audio input. The result of actuation input to the actuation input unit 160 is sent to the control unit 190 as actuation input data IPD.

The audio output unit 170 described above comprises: (i) a DA (Digital to Analogue) converter that converts data received from the stereo demodulation unit 140 to an analog signal; (ii) an amplifier that amplifies this analog signal outputted from the DA converter; and (iii) a speaker that converts the amplified analog signal to audio. It should be understood that (i) through (iii) are provided for each of the L signal LAD and the R signal RAD that are the result of the stereo demodulation processing.

The control unit 190 described above controls the overall operation of the reception device 100. When the power supply to the reception device 100 is turned ON, the control unit 190 generates a tuning command CSL that commands tuning of a preset broadcasting station, and supplies this command to the tuner unit 120. Moreover, when a tuning command inputted to the actuation input unit 160 is notified as actuation input data IPD, the control unit 190 generates a tuning command CSL according to this tuning command, and sends this command to the tuner unit 120. Furthermore, the control unit 190 generates a tuning command CSL commanding tuning to an optimum broadcasting station that has been obtained by making use of the network follow function in the RDS format, and sends this command to the tuner unit 120. And, when it sends a tuning command CSL to the tuner unit 120, the control unit 190 then sends the synchronization start command STC to the data signal processing unit 150 (in more detail, to the synchronization control part 159).

Furthermore, on the basis of the PI data and the AF data and so on included in the signal RSD from the data signal processing unit 150, the control unit 190 performs seek processing for an alternative candidate station and so on.

[Operation]

Next the operation of the reception device 100 having the structure described above will be explained, with attention being principally directed to the processing performed by the synchronization control part 159, by the buffer control part 220, and by the data output control part 280 in the synchronization detection processing by the data signal processing unit 150.

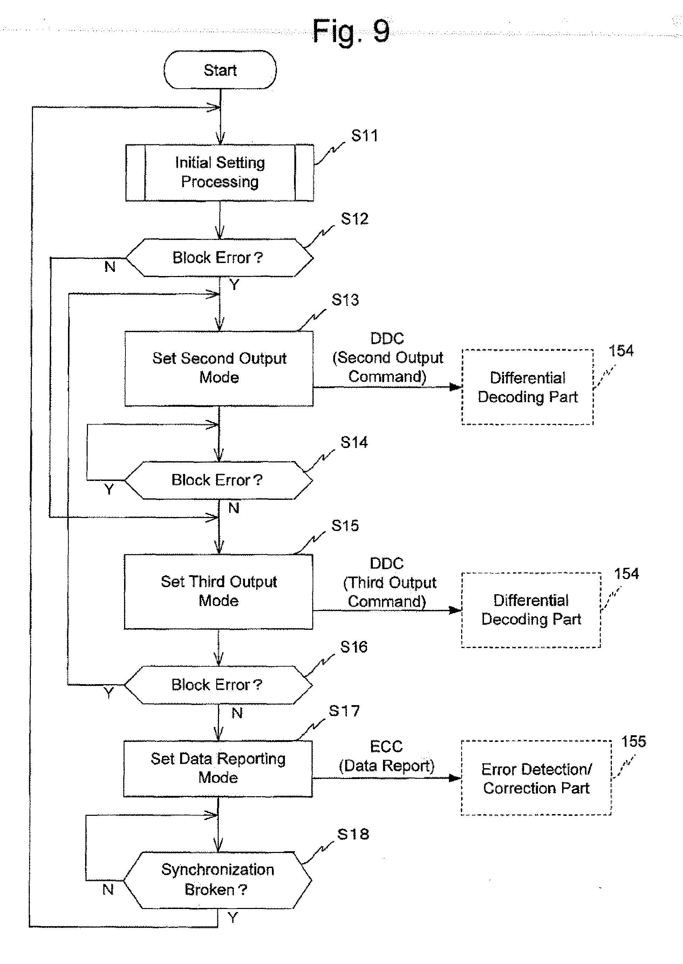

After a tuning command CSL has been sent from the control unit 190 to the tuner unit 120 that corresponds to the preset broadcasting station, to a broadcasting station designated by the user, or to an optimum broadcasting station, synchronization detection processing by the data signal processing unit 150 is started by a synchronization start command STC being sent from the control unit 190 to the data signal processing unit 150. During this synchronization detection processing, upon receipt of the synchronization start command STC, the synchronization control part 159 in the data signal processing unit 150 first performs initial setting processing in a step S11, as shown in Fig. 9.

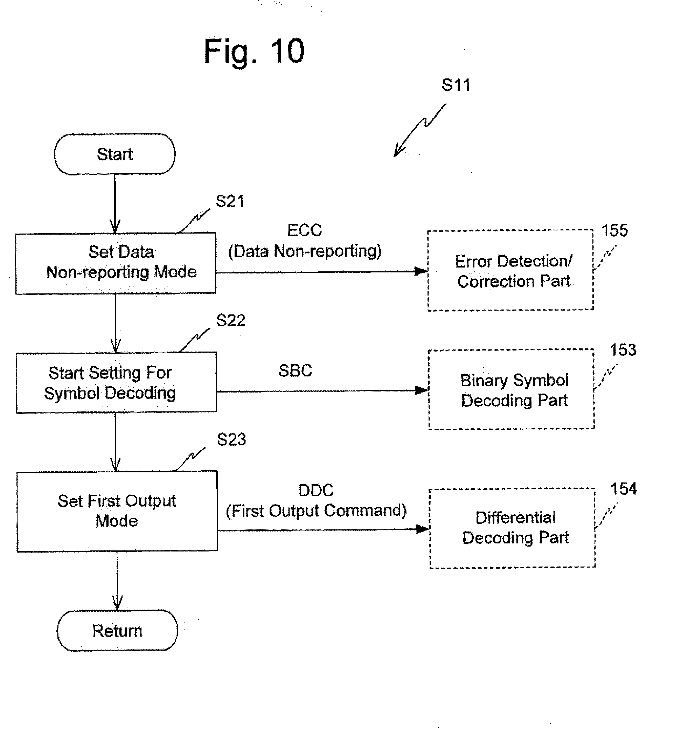

During this initial setting processing, as shown in Fig. 10, first in a step S21 the synchronization control part 159 performs setting of the error detection/correction part 155 to the data non-reporting mode. The synchronization control part 159 establishes this data non-reporting setting by sending a data non-reporting command to the error detection/correction part 155 as the operating command ECC. Upon receipt of this data non-reporting command, subsequently, the error detection/correction part 155 performs block error checking and reporting of the results of checking to the synchronization control part 159, only.

Next, in a step S22, the synchronization control part 159 performs start setting of the binary symbol decoding part 153 for starting binary symbol decoding processing. This start setting for binary symbol decoding processing is performed by the synchronization control part 159 sending the start command SBC to the binary symbol decoding part 153.

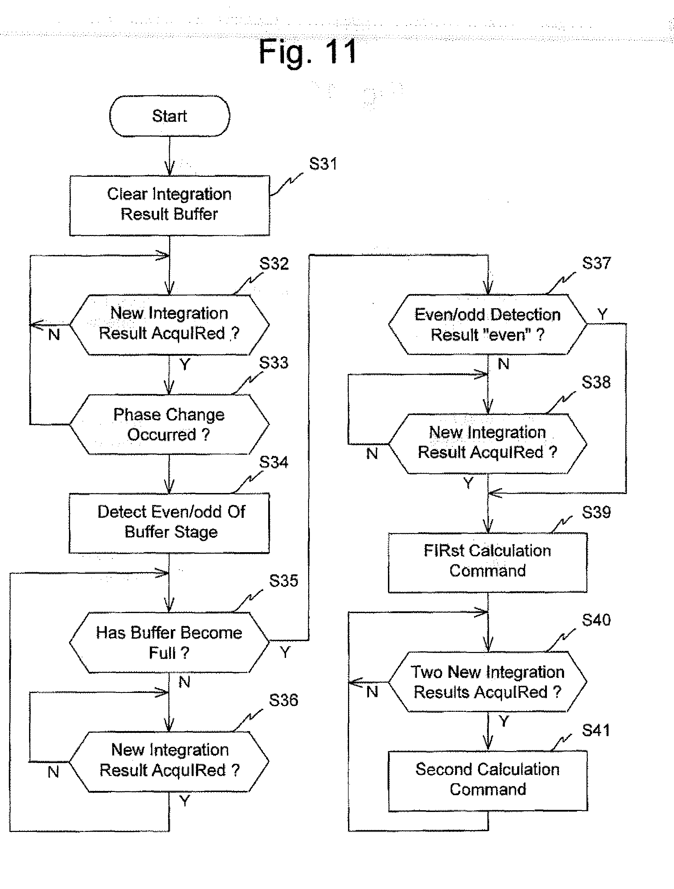

Upon receipt of this start command SBC, new binary symbol decoding processing is started by the binary symbol decoding part 153. As shown in Fig. 11, in this binary symbol decoding processing, first in a step S31, upon receipt of the start command SBC, the buffer control part 220 clears the integration result buffer 230.

Next in a step S32 the buffer control part 220 makes a decision as to whether or not a new integration result has been acquired from the integration part 210, which performs reporting of an integration result at half-bit intervals, as described above. If the result of this decision is negative (N in the step S32), then the processing of this step S32 is repeated.

But when the result of this decision is affirmative (Y in the step S32) due to the buffer control part 220 receiving a new integration result from the integration part 210 and storing it in the integration result buffer 230, then the flow of control proceeds to a step S33. In this step S33, the buffer control part 220 makes a decision as to whether or not a phase change has occurred in the signal SDD. As described above, the decision as to whether or not such a phase change has occurred is made by the buffer control part 220 comparing together the positive or negative sign of the new integration result and the positive or negative sign of the integration result that was received directly previously.

If the result of this decision in the step S33 is negative (N in the step S33), then the flow of control returns to the step S32. And thus the processing of the steps S32 and S33 is repeated, until the occurrence of a phase change is detected.

But when the result of this decision in the step S33 is positive (Y in the step S33), then the flow of control proceeds to a step S34. In this step S34, the buffer control part 220 detects whether or not the stage of the integration result buffer 230 in which is stored the integration result that in the step S32 it was decided had been newly acquired, is an even numbered stage. And the buffer control part 220 stores the result of detection as an even/odd detection result.

Next, in a step S35, the buffer control part 220 makes a decision as to whether or no the integration result buffer 230 has become full. The buffer control part 220 performs this decision by making a decision as to whether or not, after execution of the step S31, 52 integration results have been acquired.

If the result of the decision in this step S35 is negative (N in the step S35), then the flow of control proceeds to a step S36. In this step S36, the buffer control part 220 makes a decision as to whether or not a new integration result has been acquired from the integration part 210. And if the result of the decision is negative (N in the step S36), then the processing of the step S36 is repeated.

When the result of the decision in the step S36 becomes affirmative due to the buffer control part 220 receiving a new integration result from the integration part 210 and storing it in the integration result buffer 230 (Y in the step S36), then the flow of control returns to the step S35. And the processing of the steps S35 and S36 is repeated until the result of the decision in the step S35 becomes affirmative.

When, after the execution of the step S31, the result of the decision in the step S35 becomes affirmative due to the buffer control part 220 acquiring 52 integration results (Y in the step S35), then the flow of control proceeds to a step S37. In this step S37, the buffer control part 220 makes a decision as to whether or no the even/odd detection result that was detected in the previous step S34 is "even". If the result of this decision is negative (N in the step S37), then the integration result for the rear half bit interval is stored in the 0-th stage of the integration result buffer 230, and the flow of control proceeds to a step S38, since there are not integration result pairs for 26 symbol bits stored in the integration result buffer 230.

In this step S38, the buffer control part 220 makes a decision as to whether or not a new integration result has been acquired from the integration part 210. If the result of this decision is negative (N in the step S38), then the processing of this step S38 is repeated.

The result of the decision in the step S38 becomes affirmative (Y in the step S38) due to the buffer control part 220 receiving a new integration result from the integration part 210 and storing it in the integration result buffer 230. When the result of the decision in the step S38 becomes affirmative in this manner, then the buffer control part 220 specifies that integration result pairs for 26 symbol bits are stored in the integration result buffer 230. And the flow of control proceeds to a step S39.

If the result of the decision in the step S37 described above is affirmative (Y in the step S37), then the integration result for the front half bit interval is stored in the 0-th stage of the integration result buffer 230. Thus, if the result of the decision in the step S38 is affirmative, the buffer control part 220 specifies that integration result pairs for 26 symbol bits are stored in the integration result buffer 230. Then the flow of control proceeds to a step S39.

Bit synchronization is performed by this type of specification.

In the step S39 the buffer control part 220, which has decided that bit synchronization has been established due to the above specification, sends the first calculation command to the binary symbol calculation part 240, to the effect that the data values for 26 symbol bits are to be calculated. And, upon receipt of this first calculation command, as described above, the binary symbol calculation part 240 reads in the 52 integration results that are stored in the integration result buffer 230, and calculates the data values for these 26 symbol bits. And the binary symbol calculation part 240 sends these data values for the 26 symbol bits that have been calculated to the differential decoding part 154 in order of time.

When the issuing of the first calculation command in the step S39 described above has been completed, in a step S40, the buffer control part 220 makes a decision as to whether or not two new integration results have been acquired from the integration part 210. If the result of this decision is negative (N in the step S40), then the processing of this step S40 is repeated.

However, when the result of the decision in the step S40 is affirmative (Y in the step S40) due to the buffer control part 220 receiving two new integration results in sequence from the integration part 210 and storing them in the integration result buffer 230, then the buffer control part 220 specifies that an integration result pair for one new symbol bit is stored in the integration result buffer 230, and the flow of control proceeds to a step S41.

In this step S41, the buffer control part 220 sends the second calculation command to the binary symbol calculation part 240, to the effect that the data values for one symbol bit are to be calculated. And, upon receipt of this second calculation command, as described above, the binary symbol calculation part 240 reads in the integration results that are stored in the 50-th and the 51-st stages that are stored in the integration result buffer 230, and calculates the data values for this one symbol bit. And the binary symbol calculation part 240 sends these data values for the one symbol bit that have been calculated to the differential decoding part 154.

Subsequently, the processing of the steps S40 and S41 is repeated until a new start command SBC is received.

Returning to Fig. 10, when the start setting for binary symbol decoding processing in the step S22 has been completed, in a step S23, the synchronization control part 159 performs setting of the differential decoding part 154 to a first output mode. This setting of the first output mode is performed by the synchronization control part 159 sending a first output command to the differential decoding part 154 as the operating command DDC.

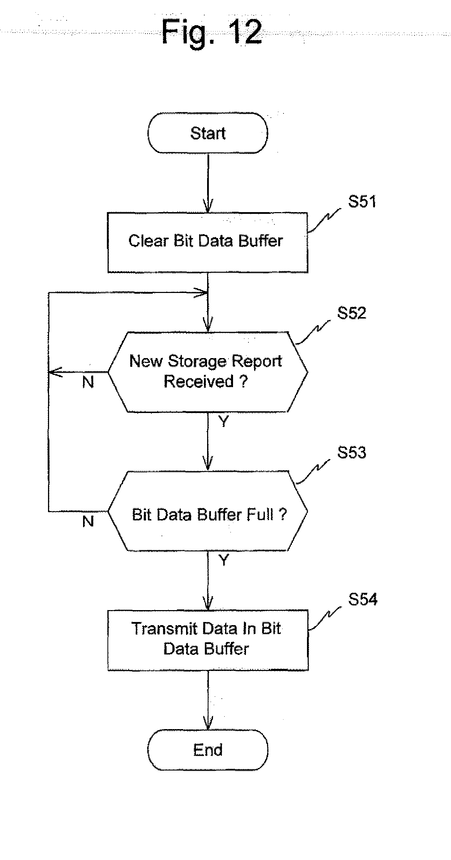

Upon receipt of this first output command, first output mode processing is started by the differential decoding part 154. In this first output mode processing, as shown in Fig. 12, first in a step S51 the data output control part 280, which has received the first output command, clears the bit data buffer 270.

Next, in a step S52, the data output control part 280 makes a decision as to whether or not a new storage report has been received from the bit data calculation part 260 that performs bit data calculation as described above and sequentially stores the results of calculation in the bit data buffer 270. If the result of this decision is negative (N in the step S52), then the processing of this step S52 is repeated.

When a new storage report is received from the bit data calculation part 260 and the result of the decision in the step S52 becomes affirmative (Y in the step S52), the flow of control proceeds to a step S53. In this step S53, the data output control part 280 makes a decision as to whether or no the bit data buffer 270 has become full. This decision is performed by the data output control part 280 making a decision as to whether or not storage reports have been received 26 times after execution of the step S51.

If the result of the decision in the step S53 is negative (N in the step S53), the flow of control returns to the step S52. And the processing of the steps S52 and S53 is repeated until the result of the decision in the step S53 becomes affirmative.

When the bit data buffer 270 becomes full and the result of the decision in the step S53 becomes affirmative (Y in the step S53), the flow of control proceeds to a step S54. In this step S54, the data output control part 280 reads in the data values for 26 bits in the bit data buffer 270, and sends them to the error detection/correction part 155. And then the data output control part 280 terminates this first output mode processing.

It should be understood that the error detection/correction part 155 considers the bit data values for 26 bits that have been received from the differential decoding part 154 as being a block data candidate, and performs block error checking by performing the syndrome calculation described above. And the error detection/correction part 155 sends the result of this checking to the synchronization control part 159.

Returning to Fig. 10, when the first output mode setting described above is completed in the step S23, the processing of the step S11 terminates, and the flow of control proceeds to the step S12 of Fig. 9. In this step S12, the synchronization control part 159 receives the checking result reported from the error detection/correction part 155, and makes a decision as to whether or not a block error has been reported in this checking result.

If the result of the decision in the step S12 is affirmative (Y in the step S12), the flow of control proceeds to a step S13. In this step S13, the synchronization control part 159 performs setting of a second output mode to the differential decoding part 154. This second output mode setting is performed by the synchronization control part 159 sending a second output command to the differential decoding part 154 as the operating command DDC.

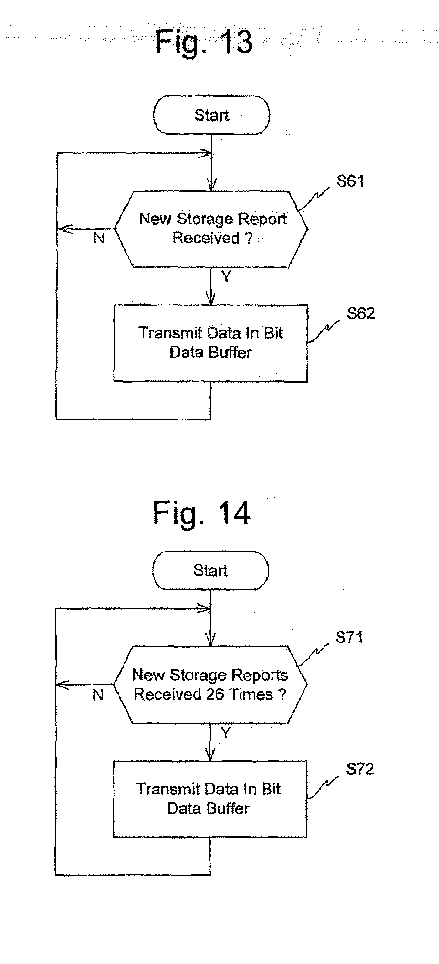

Upon receipt of the second output command, second output mode processing is started by the differential decoding part 154. In this second output mode processing, as shown in Fig. 13, first in a step S61 the data output control part 280 makes a decision as to whether or no a new storage report has been received. If the result of this decision is negative (N in the step S61), then the processing of the step S61 is repeated.

When the result of the decision in the step S61 becomes affirmative (Y in the step S61) upon receipt of a new storage report from the bit data calculation part 260, the flow of control proceeds to a step S62. In this step S62, the data output control part 280 reads in the data values for 26 bits in the bit data buffer 270, and sends them to the error detection/correction part 155. And then the flow of control returns to the step S61. Subsequently the processing of the steps S61 and S62 is repeated until some output command other than the second output command is received.

It should be understood that, each time data values for 26 bits have been received from the differential decoding part 154, the error detection/correction part 155 considers the bit data values for 26 bits that have been received as being a block data candidate, and performs block error checking by performing the syndrome calculation described above. And the error detection/correction part 155 sends the result of this checking to the synchronization control part 159.

Returning to Fig. 9, when the second output mode setting in the step S 13 described above has been completed, in a step S 14, each time a checking result has been received by reporting from the error detection/correction part 155, a decision is made as to whether or not a block error has been reported as the checking result. If the result of this decision is affirmative (Y in the step S14), then the processing of the step S14 is repeated.

If no block error is reported as the checking result from the error detection/correction part 155 so that the result of the decision in the step S14 becomes negative (N in the step S14), then the flow of control proceeds to a step S 15. Furthermore, the processing also proceeds to this step S 15 if the result of the decision in the step S12 described above is negative (N in the step S12).

In this step S15, the synchronization control part 159 performs setting to the differential decoding part 154 of a third output mode. This third output mode setting is performed by the synchronization control part 159 sending a third output command to the differential decoding part 154 as the operating command DDC.

Upon receipt of the third output command, third output mode processing is started by the differential decoding part 154. In this third output mode processing, as shown in Fig. 14, first in a step S71 the data output control part 280 makes a decision as to whether or no 26 storage reports have newly been received. If the result of this decision is negative (N in the step S71), then the processing of the step S71 is repeated.

When the result of the decision in the step S71 becomes affirmative (Y in the step S71) upon receipt of a storage report from the bit data calculation part 260 that storage has been newly performed 26 times, then the flow of control proceeds to a step S72. In this step S72, the data output control part 280 reads in the data values for 26 bits in the bit data buffer 270, and sends them to the error detection/correction part 155. And then the flow of control returns to the step S71. Subsequently the processing of the steps S71 and S72 is repeated until some output command other than the third output command is received.

It should be understood that, each time data values for 26 bits have been received from the differential decoding part 154, the error detection/correction part 155 considers the bit data values for 26 bits that have been received as being a block data candidate, and performs block error checking by performing the syndrome calculation described above. And the error detection/correction part 155 sends the result of this checking to the synchronization control part 159.

Returning to Fig. 9, when the third output mode setting in the step S15 described above has been completed, in a step S16, a decision is made as to whether or not a checking result has been reported from the error correction/detection part 155 and a block error has been reported as the checking result. If the result of this decision is affirmative (Y in the step S16), the flow of control returns to the step S13. Subsequently the processing of the steps S13 through S16 is repeated, until the result of the decision in this step S16 becomes affirmative.

If the result of the decision in the step S16 is negative (N in the step S16), then it is decided that block synchronization has been performed if a block data error is not detected for either of the two succeeding block candidates, and the flow of control proceeds to a step S 17 . In this step S 17, the synchronization control part 159 establishes a data reporting mode setting for the error detection/correction part 155. This data report setting is performed by the synchronization control part 159 sending a command for data reporting to the error detection/correction part 155 as the operating command ECC.

And, upon receipt of this data reporting command, the error detection/correction part 155 thereafter, in addition to block error checking and checking result reporting, also, if a block error has been detected, performs correction of the data word on the basis of the results of syndrome calculation. And the error detection part 155 employs the data word just as it is if no block error has been detected, while employing the result of correcting the data word if a block error has been detected, and while also, each time data for a new group is complete, sending this data to the control unit 190 as the signal RSD. The RDS data including PI data and AF data and so on is sent to the control unit 190 in this manner after group synchronization has been performed thereupon.

Next, in a step S18, the synchronization control part 159 makes a decision as to whether or not the preservation of synchronization has been broken. In this embodiment, this decision is performed by making a decision as to whether or not, in the checking results from the error detection/correction part 155, a block error has been detected for any of a predetermined number of successive data blocks (for example, five).

If the result of the decision in this step S18 is negative (N in the step S18), then the processing of the step S18 is repeated. On the other hand, if the result of the decision in the step S18 is affirmative (Y in the step S18), then the flow of control returns to the step S11, and subsequently the processing of the steps S11 through S18 is repeated.

Due to data reception processing being performed together with the above synchronization detection processing, data emitted from the broadcasting station to which tuning is set is reported to the control unit 190. The control unit 190 performs the control procedure for seeking for alternative candidate stations and so on by utilizing the PI data and AF data and so on included in this type of data.

Moreover, in this reception device 100, stereo demodulation processing is performed by the stereo demodulation unit in parallel with the above described synchronization detection processing. And audio corresponding to the L signal LAD and to the R signal RAD that result from this stereo demodulation processing is reproduced and outputted from the audio output unit 170.

As has been explained above, in this embodiment, when the synchronization detection processing is started, first, the buffer control part 220 clears the integration result buffer 230. And next, the buffer control part 220 sequentially stores the results of integration of the binary phase shift keying signal, performed by the integration part 210 for each half bit interval, in the integration result buffer 230.

When storing this type of integration results in the integration result buffer 230, the buffer control part 220 detects phase change of the binary phase shift keying signal on the basis of temporal transitions of the values of the integration results. And the buffer control part 220 detects whether the stage of the integration result buffer 230 in which the integration result for the half bit interval directly after the phase change time point is stored is an even numbered stage or an odd numbered stage, and keeps the result of this detection as an even/odd detection result.

Subsequently when, on the basis of these even/odd detection results, it is specified by the buffer control part 220 that integration result pairs corresponding to 26 symbol bits have been stored in the integration result buffer 230, then the binary symbol calculation part 240 calculates the data values for these 26 symbol bits on the basis of the 52 integration results stored in the integration result buffer 230. And the results of calculation by the binary symbol calculation part 240 are utilized in the detection of block synchronization.

Due to this, block synchronization detection is performed while also utilizing the integration results detected before the phase change of the binary phase shift keying signal. Thus, according to this embodiment, it is possible rapidly to perform block synchronization of the data transmitted by the binary phase shift keying signal.

**[MODIFICATION OF THE EMBODIMENT]**

The present invention is not to be considered as being limited to the embodiment described above; alterations of various types are possible.

For example, in the embodiment described above, it is arranged to detect block synchronization when no block data error has been detected in either of two successive block candidates. By contrast, it would also be acceptable to arrange to detect block synchronization when no block data error has been detected in any of three successive block candidates. Furthermore, it would also be acceptable to arrange to detect block synchronization when no block data error has been detected in some predetermined number of block candidates, among three or more successive block candidates.

Furthermore, in the embodiment described above, an example was disclosed in which it was detected that block synchronization had been broken if block data errors were detected for each of five successive block candidates. By contrast, it would also be acceptable to arrange to detect that block synchronization has been broken if block data errors are detected for each of a plurality of block candidates other than five.

Moreover while , in the embodiment described above, the present invention was applied to a reception device employing the RDS format, it would also be possible to apply the present invention to some format other than the RDS format in which the binary phase modulation format is employed for data transmission, for example to a reception device in which the RBDS (Radio Broadcast Data System) format is employed.

Moreover while , in the embodiment described above, the present invention was applied to a FM radio reception device, it would also be possible to apply the present invention to a device that has a function of receiving broadcasts of some other type; and, moreover, it would also be possible to apply the present invention to a broadcast reception device that is mounted to a moving body other than a vehicle. Yet further, for example, it would also be possible to apply the present invention to a device that has a broadcast reception function and that is installed in a household or the like.

It should be understood that it would also be acceptable to arrange for parts or all of the wave detection unit 130, the stereo demodulation unit 140, the data signal processing unit 150, and the control unit 190 of the embodiment described above to be constituted by a computer that serves as a calculation means and that has a central processing device (CPU: Central Processing Unit), a read only memory (ROM: Read Only Memory), a random access memory (RAM: Random Access Memory) and so on, and to arrange to perform all or parts of the processing of the embodiment described above by executing a program that has been prepared in advance upon the computer. It would be acceptable to arrange for this program to be acquired in a format in which it is recorded upon a transportable recording medium such as a CD-ROM or a DVD or the like; or it could also be acquired in the format of being distributed via a network such as the internet or the like.

**Claims**

1. A block synchronization device that demodulates a binary phase shift keying signal in a continuously synchronous system upon which information data made up from data blocks made up from a predetermined number of data bits is carried, and that performs block synchronization, **characterized by** comprising:

   a wave detection means that performs synchronized wave detection upon said binary phase shift keying signal, and generates a wave detection signal and a synchronization clock signal;
   an integration means that calculates an integrated value of said wave detection signal for each half bit interval, on the basis of said synchronization clock signal;
   a buffer storage means that sequentially stores just twice said predetermined number of results of integration by said integration means;
   an even/odd detection means that detects whether the stage of said buffer storage means in which the result of integration of said wave detection signal by said integration means for the half bit interval directly after a phase change time point is stored, is an even numbered stage or an odd numbered stage;
   a specification means that, on the basis of the result of detection by said even/odd detection means, performs specification that results of integration by said integration means corresponding to said predetermined number of bits are stored in said buffer storage means; and
   a calculation means that, on the basis of the contents stored in said buffer storage means at the time point that specification is performed by said specification means, calculates data values for each of said predetermined number of bit interval lengths corresponding to the contents stored in said buffer storage means.

2. A block synchronization device according to Claim 1, **characterized in that**:

   for each of said half bit intervals, over almost its entire extent, the signal value of said wave detection signal is one of positive and negative; and
   said calculation means:

   for two integration results that correspond to one bit, inverts the sign of a predetermined one of those integration results as determined by the sequence of integration time points, and adds it to the other of those integration results; and
   obtains a digital value corresponding to each bit, on the basis of the sign of the value that is the result of said addition.

3. A block synchronization device according to Claim 1 or Claim 2, **characterized by** further comprising:

   an error detection means that, for said predetermined number of bit data items of said information data obtained from the result of calculation by said calculation means, performs detection of a block data error according to a block data error detection method determined for said data block; and
   a block synchronization detection means that performs block synchronization detection on the basis of temporal transitions of the result of block data error detection by said error detection means.

4. A block synchronization device according to Claim 3, **characterized in that** said block synchronization detection means decides that said block synchronization has been performed, if no block data error has been detected by said error detection means for any one of a first predetermined block number of successive block candidates.

5. A block synchronization device according to Claim 3, **characterized in that** said block synchronization detection means decides that said block synchronization has been performed, if among a first predetermined block number of successive block candidates, a block data error has not been detected by said error detection means for a second predetermined block number of block candidates.

6. A reception device that receives a signal upon which is superimposed a binary phase shift keying signal in a continuously synchronous system upon which information data made up from data blocks made up from a predetermined number of data bits is carried, **characterized by** comprising:

a tuning means that performs tuning to a desired broadcasting station that emits a broadcast wave upon which said binary phase shift keying signal is multiplexed; and

a block synchronization device as described in any one of Claims 1 through 5 that demodulates said binary phase shift keying signal and performs block synchronization.

7. A reception device according to Claim 6, **characterized** being a radio data system reception device.

8. A block synchronization processing method that is used by a block synchronization device that demodulates a binary phase shift keying signal in a continuously synchronous system upon which information data made up from data blocks made up from a predetermined number of data bits is carried, and that performs block synchronization, **characterized by** comprising:

a wave detection process of performing synchronized wave detection upon said binary phase shift keying signal, and generating a wave detection signal and a synchronization clock signal;

an integration process of performing calculation of an integrated value of said wave detection signal for each half bit interval on the basis of said synchronization clock signal, and sequentially storing just twice said predetermined number of results of integration in a buffer storage means;

a detection process of detecting whether the stage of said buffer storage means in which the result of integration of said wave detection signal for the half bit interval directly after a phase change time point is stored, is an even numbered stage or an odd numbered stage;

a specification process of, on the basis of the result of detection by said detection process, performing specification that results of integration corresponding to said predetermined number of bits are stored in said buffer storage means; and

a calculation process of, on the basis of the contents stored in said buffer storage means at the time point that specification is performed by said specification process, calculating data values for each of said predetermined number of bit interval lengths corresponding to the contents stored in said buffer storage means.

9. A block synchronization processing program, **characterized in that** it causes a calculation means to execute a block synchronization processing method according to Claim 8.

10. A recording medium, **characterized in that** a block synchronization processing program according to Claim 9 is recorded thereupon so as to be readable out by a calculation means.

# Fig. 1

DGP

BLK₀ BLK₁ BLK₂ BLK₃

DTW₀ CKW₀ DTW₁ CKW₁ DTW₂ CKW₂ DTW₃ CKW₃

| Data Word | Check Word | Data Word | Check Word | Data Word | Check Word | Data Word | Check Word |

16 bits | 10 bits

26 bits

104 bits

# Fig. 2

100

140                                              170

LAD

| Stereo Demodulation Unit |        | Audio Output Unit |
|---|---|---|

RAD

110        120                130                      150

| Tuner Unit | | Wave Detection Unit | | Data Signal Processing Unit |
|---|---|---|---|---|

RFS        IFD                DSD

CSL        190                        STC        RSD

160

| Control Unit | | Actuation Input Unit |
|---|---|---|

IPD

# Fig. 3

## Fig. 4

Fig. 5

# Fig. 6

230

| $\cdots\cdots\cdots\cdots$ | $IR_{2r}$ | $IR_{2r+1}$ | $\cdots\cdots\cdots\cdots$ |
|---|---|---|---|

240

$$SV_r = IR_{2r} - IR_{2r+1}$$

$$SV_r > 0 \;\rightarrow\; SD_r = 1$$
$$SV_r < 0 \;\rightarrow\; SD_r = 0$$

# Fig. 7

230

| $\cdots\cdots\cdots\cdots$ | $IR_{50}$ | $IR_{51}$ |
|---|---|---|

240

$$NSV = IR_{50} - IR_{51}$$

$$NSV > 0 \;\rightarrow\; NSD = 1$$
$$NSV < 0 \;\rightarrow\; NSD = 0$$

# Fig. 8

# Fig. 9

Start

Initial Setting
Processing ~ S11

Block Error? ~ S12
N
Y

Set Second Output
Mode ~ S13
DDC
(Second Output
Command) → Differential
Decoding Part ~ 154

Block Error? ~ S14
Y
N

Set Third Output
Mode ~ S15
DDC
(Third Output
Command) → Differential
Decoding Part ~ 154

Block Error? ~ S16
Y
N

Set Data Reporting
Mode ~ S17
ECC
(Data Report) → Error Detection/
Correction Part ~ 155

Synchronization
Broken? ~ S18
N
Y

# Fig. 10

S11

Start

S21

Set Data
Non-reporting Mode

ECC
(Data Non-reporting)

Error Detection/
Correction Part — 155

S22

Start Setting For
Symbol Decoding

SBC

Binary Symbol
Decoding Part — 153

S23

Set First Output
Mode

DDC
(First Output Command)

Differential
Decoding Part — 154

Return

# Fig. 11

```
                    ┌─────────┐
                    │  Start  │
                    └────┬────┘
                         │
                         ▼                    S31
              ┌────────────────────┐
              │  Clear Integration │
              │   Result Buffer    │
              └─────────┬──────────┘
                        │
          ┌─────────────┤
          │             ▼                      S32
          │      ╱New Integration╲
        N │←────⟨ Result AcquiRed ?⟩
          │      ╲                ╱
          │             │ Y
          │             ▼                      S33
          │      ╱  Phase Change  ╲
          │     ⟨    Occurred ?    ⟩
          │      ╲                ╱
          │             │                      S34
          │             ▼
          │   ┌────────────────────┐
          │   │ Detect Even/odd Of │
          │   │    Buffer Stage    │
          │   └─────────┬──────────┘
          │             │                      S35
          │             ▼
          │      ╱ Has Buffer Become ╲
          │     ⟨       Full ?        ⟩───── Y
          │      ╲                   ╱
          │             │ N
          │             ▼                      S36
          │      ╱New Integration ╲
        N │←────⟨ Result AcquiRed ?⟩
          │      ╲                ╱
          │             │ Y
          └─────────────┘
```

```
                              S37
       ╱Even/odd Detection╲
      ⟨   Result "even" ?   ⟩───── Y
       ╲                   ╱
              │ N
              ▼                      S38
       ╱New Integration ╲
    N ⟨ Result AcquiRed ?⟩
       ╲                ╱
              │ Y
              ▼                      S39
   ┌────────────────────┐
   │  FIRst Calculation │
   │      Command       │
   └─────────┬──────────┘
             │                      S40
             ▼
       ╱Two New Integration╲
    N ⟨ Results AcquiRed ?  ⟩
       ╲                   ╱
             │ Y
             ▼                      S41
   ┌────────────────────┐
   │ Second Calculation │
   │      Command       │
   └────────────────────┘
```

# Fig. 12

```
              Start
                │
                ▼
   ┌────────────────────────┐      S51
   │  Clear Bit Data Buffer │
   └────────────────────────┘
                │
                ▼
        ╱────────────────╲          S52
  N ◄──┤ New Storage Report │
       │     Received ?     │
        ╲────────────────╱
                │ Y
                ▼
        ╱────────────────╲          S53
  N ◄──┤ Bit Data Buffer Full ? │
        ╲────────────────╱
                │ Y
                ▼
   ┌────────────────────────┐      S54
   │   Transmit Data In Bit │
   │      Data Buffer       │
   └────────────────────────┘
                │
                ▼
              End
```

# Fig. 13

```
                    ┌──────────┐
                    │  Start   │
                    └────┬─────┘
                         │
    ┌────────────────────┤
    │                    ▼
    │          ╱─────────────────────╲      S61
    │   N     ╱   New Storage Report   ╲
    │◄────────    Received ?           ╱
    │         ╲─────────────────────╱
    │                    │ Y
    │                    ▼
    │          ┌─────────────────────┐      S62
    │          │  Transmit Data In Bit│
    │          │  Data Buffer         │
    │          └──────────┬──────────┘
    │                     │
    └─────────────────────┘
```

# Fig. 14

```
                    ┌──────────┐
                    │  Start   │
                    └────┬─────┘
                         │
    ┌────────────────────┤
    │                    ▼
    │          ╱─────────────────────╲      S71
    │   N     ╱   New Storage Reports  ╲
    │◄────────    Received 26 Times ?  ╱
    │         ╲─────────────────────╱
    │                    │ Y
    │                    ▼
    │          ┌─────────────────────┐      S72
    │          │  Transmit Data In Bit│
    │          │  Data Buffer         │
    │          └──────────┬──────────┘
    │                     │
    └─────────────────────┘
```

## INTERNATIONAL SEARCH REPORT

| | International application No. |
|---|---|
| | PCT/JP2008/073574 |

A. CLASSIFICATION OF SUBJECT MATTER
*H04L7/00*(2006.01)i, *H04B1/16*(2006.01)i

According to International Patent Classification (IPC) or to both national classification and IPC

B. FIELDS SEARCHED

Minimum documentation searched (classification system followed by classification symbols)
H04L7/00-7/10, H04B1/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-281008 A (Hitachi Kokusai Electric Inc.), 27 September, 2002 (27.09.02), Full text; all drawings (Family: none) | 1-10 |
| A | JP 11-112478 A (Sanyo Electric Co., Ltd.), 23 April, 1999 (23.04.99), Full text; all drawings (Family: none) | 1-10 |
| A | JP 8-79016 A (Pioneer Corp.), 22 March, 1996 (22.03.96), Full text; all drawings & EP 701341 A2 | 1-10 |

☐ Further documents are listed in the continuation of Box C.  ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 27 January, 2009 (27.01.09) | 03 February, 2009 (03.02.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEISEI111999112478 B

- JP 8079016 A